Europäisches Patentamt

European Patent Office

Office européen des brevets

(11) Publication number: **0 040 924**
**B1**

(12) **EUROPEAN PATENT SPECIFICATION**

(45) Date of publication of patent specification: **06.03.85**

(51) Int. Cl.⁴: $G\ 01\ S\ 1/32,\ G\ 01\ S\ 5/10$

(21) Application number: **81302094.8**

(22) Date of filing: **11.05.81**

(54) **Apparatus for obtaining the phase of a fundamental frequency from phase values of harmonics thereof.**

(30) Priority: **27.05.80 GB 8017332**
**19.06.80 GB 8020082**

(43) Date of publication of application:
**02.12.81 Bulletin 81/48**

(45) Publication of the grant of the patent:
**06.03.85 Bulletin 85/10**

(84) Designated Contracting States:
**AT BE CH DE FR GB IT LI LU NL SE**

(56) References cited:
**DE-B-1 548 412**
**DE-B-2 302 712**
**DE-C- 904 195**
**US-A-2 844 816**

(73) Proprietor: **DECCA LIMITED**
**Western Road**
**Bracknell Berkshire RG12 1RG (GB)**

(72) Inventor: **Bridges, Donald Edward**
**Santon, Upper Prospect Road**
**Osbaston Monmouth South Wales (GB)**
Inventor: **Hendley, Dennis Alfred**
**Four Oaks, The Ridgeway**
**Cranleigh, Surrey GU6 7HR (GB)**
Inventor: **Forder, Justin Murray**
**7 College Gardens**
**New Malden, Surrey (GB)**
Inventor: **Wilson, John Douglas**
**16a Moselle Road**
**Biggin Hill, Kent (GB)**

(74) Representative: **Horton, Andrew Robert Grant**
**et al**
**BOULT, WADE & TENNANT 27 Furnival Street**
**London, EC4A 1PQ (GB)**

Courier Press, Leamington Spa, England.

## Description

This invention relates to the obtaining of the phase of a fundamental signal from the phase angles of harmonics of the fundamental signal.

One example of the use to which the invention may be put is in a particular radio navigation system (known as the Decca Navigator system) in which there is, for example, a master transmitting station and three slave transmitting stations which normally radiate respectively the sixth, fifth, eighth and ninth harmonics of a fundamental frequency. The four signals are picked up at a mobile receiver which makes a multiplicity of phase comparisons in order to derive indications of hyperbolic position lines each of which has a master station and a respective slave station at its foci. For example, the mobile receiver may compare, at a frequency 30F, the 6F signal from the master station and the 5F signal from the respective slave station to obtain a phase angle representing one hyperbolic position line and it may compare, at a frequency 24F, the 6F signal from the master station and the 8F signal from the respective slave station to obtain another position line and so on. The indications of position lines are accurate but not unique and it is accordingly necessary to make a further phase comparison, usually at the fundamental frequency, to obtain a coarse, but less ambiguous indication of position. The phase comparisons appropriate for resolving the ambiguities are known as lane identification. For this purpose the harmonically related signals which are normally radiated in phase-locked synchronism from the various stations are, from time to time, interrupted and the stations radiate in turn all the related harmonics at, in this particular example, 5F, 6F, 8F and 9F Hertz, where 1F is the fundamental frequency. A combination of these harmonically related signals ought to provide an indication, at the mobile receiver, of the phase of the fundamental signal radiated by that particular station; this phase angle is compared with phase angles of the fundamental frequency effectively radiated from the other stations in order to provide the aforementioned lane identification.

Various methods of reconstituting the phase angle of the fundamental frequency by combining the available harmonic frequencies are known and have been used for many years. Unfortunately, the characteristics of propagation of the different harmonic frequencies are different and there is in general no guarantee that the phase relationship between the harmonic frequencies as they are transmitted is maintained at the point of their reception. That is particularly important, because it is the phase relationship between the harmonics, and not the phase of any one of them, which enables the phase of the fundamental to be determined. For example, expressing the various phase angles as decimal fractions of $2\pi$, if the phase angle of the fundamental is 0.1 $(2\pi)$ the phase angles $\alpha_5$, $\alpha_6$, $\alpha_8$ and $\alpha_9$ of the harmonics are 0.5, 0.6, 0.8 and 0.9 respectively whereas if the phase angle $\alpha_1$ of the fundamental is 0.6 $(2\pi)$ then the aforementioned phase angles are 0, 0.6, 0.8 and 0.4 respectively. It will be noticed that no specific harmonic determines the phase angle of the fundamental. If therefore one or two of the harmonics are subject to differential phase shift, the indication of phase angle of the fundamental frequency will certainly be in error. Nevertheless, it is one purpose of the present invention to minimise the error and thereby improve the reconstitution of the phase of a fundamental obtained from phase values of its harmonics in the presence of differential phase distortion, whether the phase of the fundamental signal be used for the purposes indicated in the foregoing or in other systems which require such a reconstitution of the phase of a fundamental signal.

Another aspect of the present invention is the use of numerical processing, rather than analogue circuits, for the reconstitution of the phase angle of a fundamental signal. For example, if the phase angle of the fundamental signal is supposed to be 0.7 $(2\pi)$ radians, then, ideally, the fifth, sixth, eighth and ninth harmonics would be 0.5 $(2\pi)$, 0.2 $(2\pi)$, 0.6 $(2\pi)$ and 0.3 $(2\pi)$ respectively, it being convenient to regard the phase angle as a fraction, particularly a decimal fraction, of the modulus, $2\pi$, which represents a complete cycle of phase change. There is, even in the absence of contamination or degradation of the harmonics, a general problem of how to obtain, by numerical processing, the number 0.7, representing the phase at the frequency 1F, from the set of numbers (0.5, 0.2, 0.6, 0.3). Accordingly, it is another purpose of the present invention to enable the phase of a fundamental to be reconstituted from numerical indications of the phase angles of a set of its harmonics of which the phase relationships ought to indicate the phase of the fundamental. In what follows there is described a system which provides a reasonably accurate indication of the fundamental notwithstanding phase error of approximately 0.1 $(2\pi)$ radians in each harmonic.

It is known from US—A—2 844 816 to radiate harmonically related phase-locked signals and to use those signals at a receiver to derive the phase angle of the common fundamental and it is also known therefrom to obtain a plurality of signals at a derived harmonic frequency by combining various received signals and to divide the signals at the derived harmonic frequencies down to the fundamental frequency. It is also known, from the "Omega" navigation system to convert the received signals into digital form and to perform by programmed computer the various phase comparisons and other functions prescribed by US—PAS—2 844 816.

The present invention in its broadest form comprises apparatus for providing a signal numerically indicating phase angle at a fundamental frequency from a first signal numerically indicating the phase angle of a lower harmonic of the fundamental frequency and a second signal numerically indicating phase angle within a complete cycle of phase change at the frequency of a higher harmonic of the fundamental frequency, the apparatus being arranged (i) to multiply the first signal to render it effectively at the frequency of the said higher harmonic and in a form including an integer representing complete cycles of phase change at the frequency of the said higher harmonic; (ii) to form a merged signal comprising the said integer and the said second signal; and (iii) to divide the said merged signal by the harmonic number of the said higher harmonic.

As will be made clearer with reference to a specific example, the present invention is based on the combining of various sets of the numerical indications algebraically to obtain secondary numerical indications representing phase angles of frequencies which may be at the fundamental or at the given harmonic frequencies but which in general are in the range including the fundamental and highest given harmonic, converting at least one pair of those secondary indications to indications which have the same modulus, and which accordingly represent phase angles at the same frequency, and merging the two indications. In general, of the two secondary indication of each pair, one, when converted to the same modulus as the other will provide a more accurate indication of the fractional phase angle than does the other indication, which latter indication will, however, denote the integral value of the phase angle. The process of merging is, as explained hereinafter, in practice the formation of a new numerical indication which takes the integer value from the said latter indication but the more accurate fractional value from the former. The merged value may either be used as a secondary indication for the computation of a merged value representative of the phase angle at a different frequency or, eventually, after appropriate multiplication if necessary, be merged with one of the input numerical indications. The purpose of this method is to derive, effectively by utilising the phase comparisons that can be made at the various different frequencies that can be obtained by simple combination of the input frequencies, fractional estimates of the phases of various frequencies intermediate the range between the fundamental and the highest available harmonic and to use numerical indications of phase comparisons made at lower frequencies to obtain integral values of the phase angles at the higher frequencies. Indications of phase angles at the higher frequencies are then divided by the appropriate harmonic number to provide a plurality of indications of phase angle at the fundamental frequency and a reasonably reliable determination of the phase angle of the fundamental can be obtained from a mean value of the numerical indications thus obtained.

Various ways of organising a processor, which is preferably but not necessarily a programmed microprocessor, are possible in order to obtain the required indication of phase. The programmes which may be formulated will differ according to the particular harmonics that are available, the extent to which numerical indication thereof may be manipulated and the extent to which it is desired to optimise the information, which would be redundant if propagation were ideal, available from a multiplicity of comparisons made at various harmonics frequencies intermediate the fundamental and the lowest received harmonic.

Reference will hereinafter be made to the accompanying drawings, which comprise:

Figure 1 (in three parts 1A, 1B and 1C), which represents apparatus which may form part of a receiver for a radio navigation system and which includes a microprocessor;

Figure 1D, which illustrates a detail of Figure 1A;

Figure 2 (in two parts 2A and 2B), which is a schematic flow diagram of part of a programme for the microprocessor;

Figure 3, which is a schematic flow diagram of part of a programme for the microprocessor; and

Table I, which represents various numerical examples of the operation of the system described with reference to the earlier Figures.

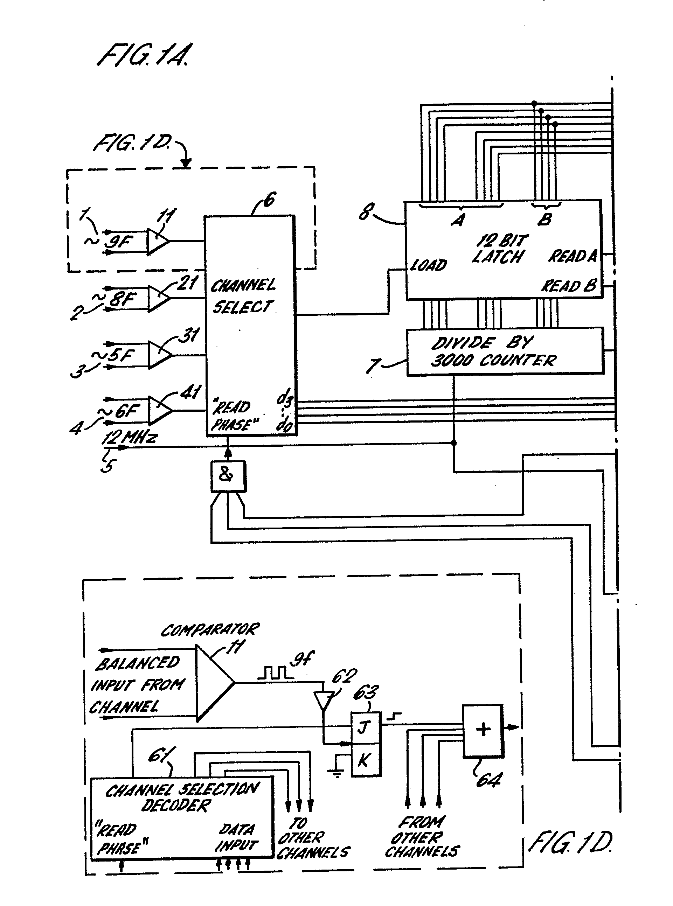

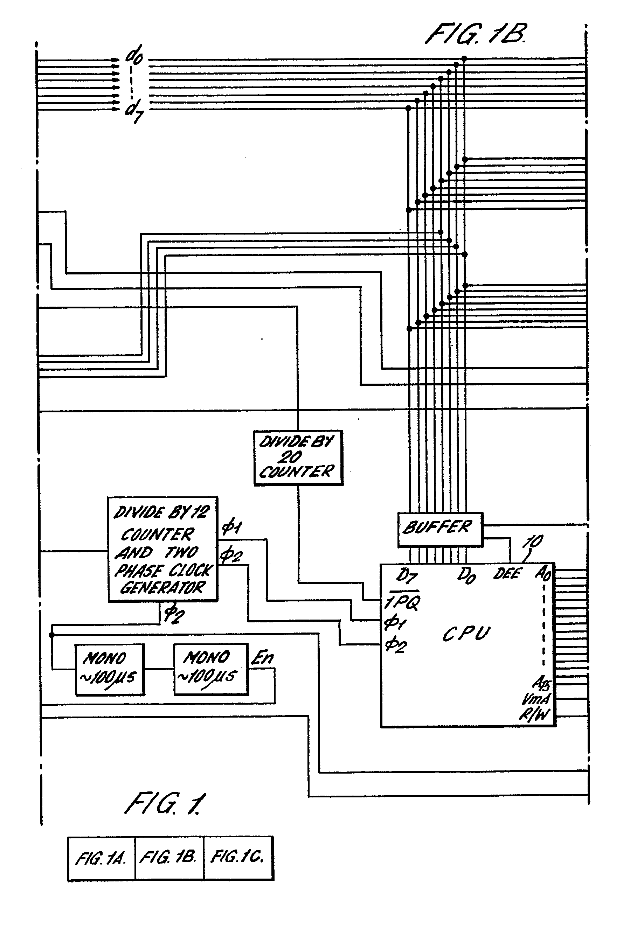

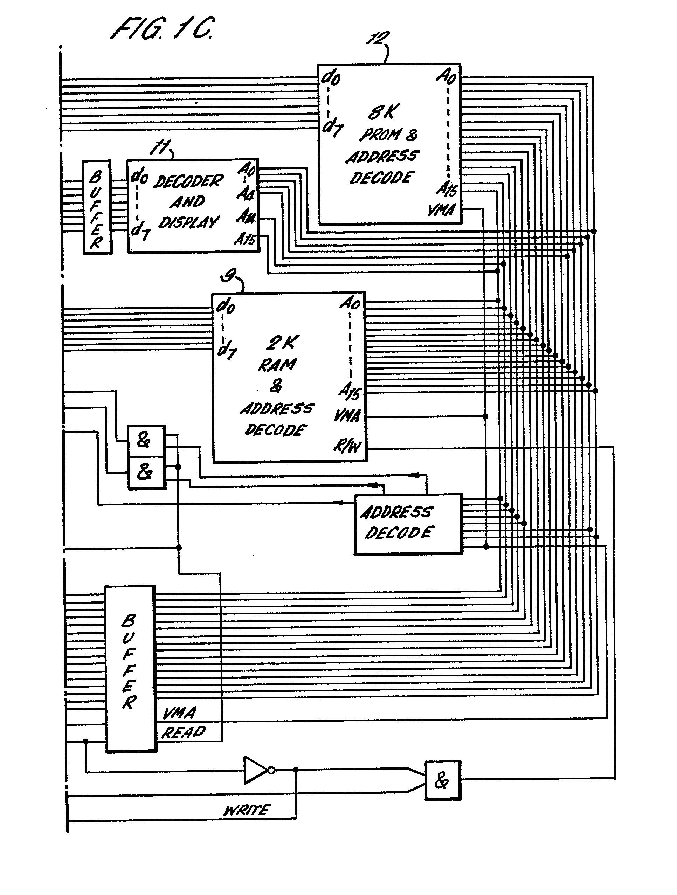

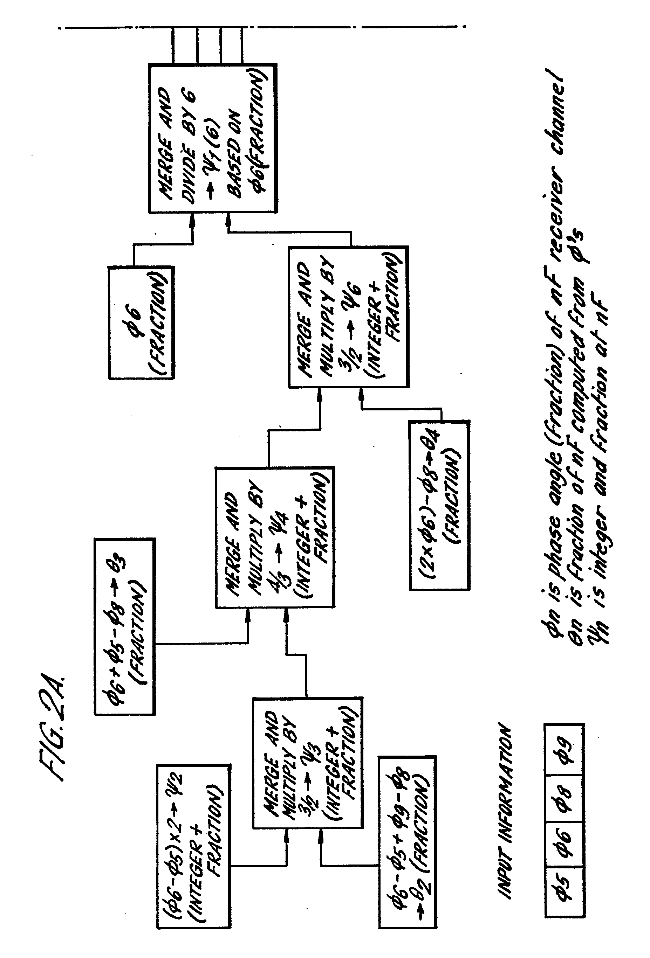

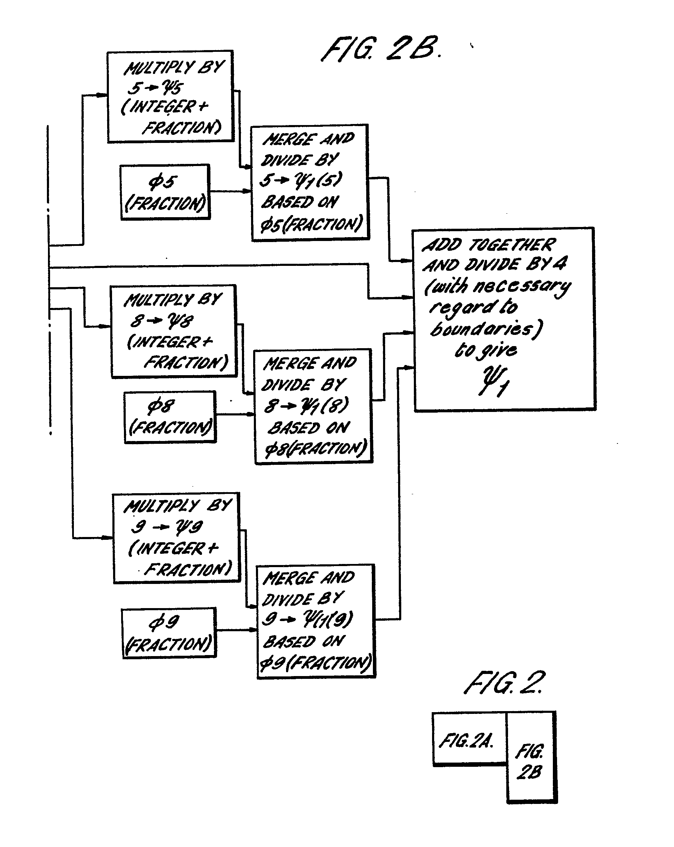

Figure 1 illustrates, for example, part of a receiver for a phase comparison radio navigation system of the kind described in the foregoing. At inputs 1, 2, 3 and 4 are received signals at 9F, 8F, 5F and 6F respectively, being harmonics originally radiated in phase lock synchronism and radiated thus in turn from each of the transmitting stations at appropriate times. These signals are converted by means of respective comparators 11, 21, 31 and 41 into square signals and are selected in sequence by a channel selector 6. This selector responds to the first arrival, after actuation for selection, of a positive transition of the square wave at the selected harmonic frequency.

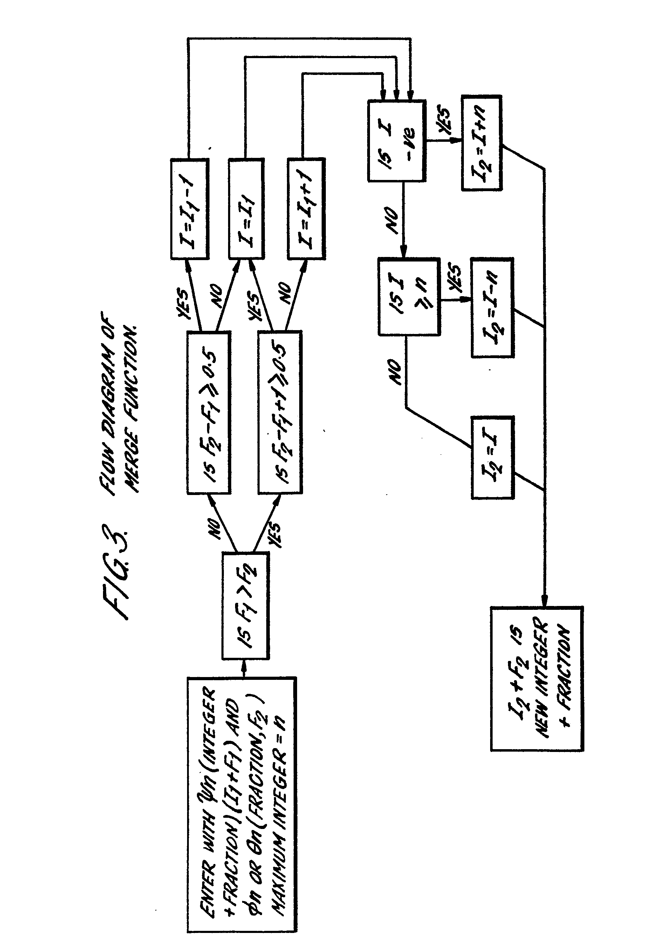

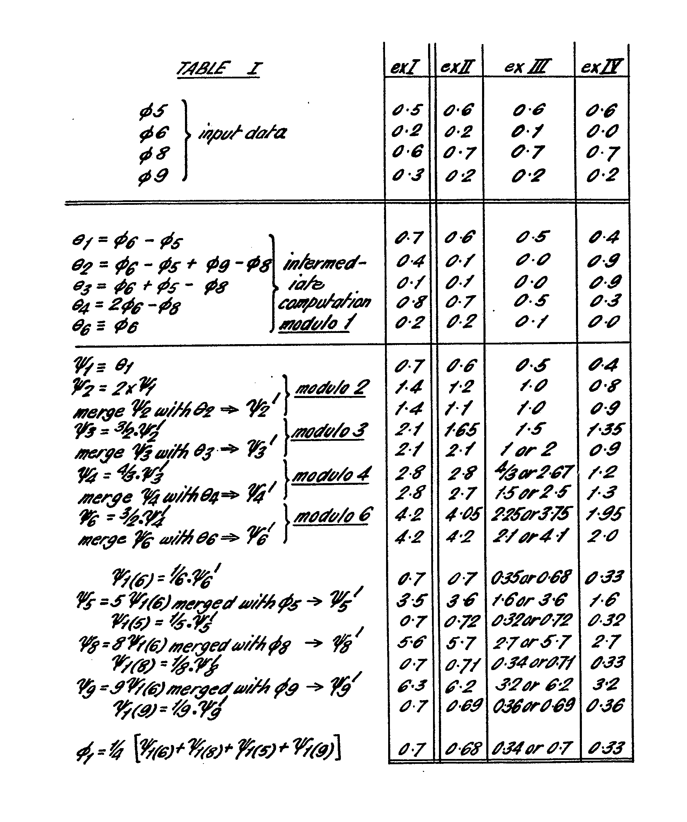

The comparator 11 and the respective part of the channel selector 10 are shown in more detail in Figure 1D. A channel selection decoder 61 controls a bistable 63 which receives the output of the comparator 11 *via* a buffer amplifier 62. The bistable 63 feeds one input of an OR-gate 64 which is common to the various channels. At an input 5 (Fig. 1A) is received a stable 12 MHz clock signal which is fed into a counter 7 arranged to divide by 3000; the positive going edge of the selected waveform is used to strobe this counter. The numerical value thereby obtained is latched on twelve lines by means of a latch circuit 8 and the value is multiplied by the respective harmonic number before it is dispatched to a random access memory 9. The other main elements of the system comprise a central processing unit, which may be an M6800 microprocessor 10, a decoder and display unit 11 and a programmable ready only memory 12. These are organised and arranged together with the various buffers, gates, counters and monostable circuits shown in Figure 1 to perform the programmes illustrated in Figures 2 and 3 and will not be described in detail.

Figure 2 is a flow diagram for the reconstitution of the phase of the fundamental from the numerical indications, hereinafter called primary indications, of the phase angles of the available harmonic signals. Figure 3 is a subsidiary flow diagram of a merge function which is employed in the flow diagram of Figure 2. Although the flow diagram may be self explanatory, the manipulation that it employs and the multistage comparison that it provides is given in what follows for the sake of completeness.

In essence, the programme is based on a multiplicity of mergers of two numerical indications. Of these two numerical indications one, in the later stages of the programme, may be a primary indication but in general one is a combination of a plurality of the primary indications and another is a merged indication. The two numerical indications represent phase angles at different frequencies and the one that represents phase angle at a lower frequency is multiplied so that there are two indications representing phase angle at the same frequency; one of these indications represents the fractional value of the phase angle more accurately than does the other but, in general, only one of the indications will indicate the integral value of the phase angle. A merger of the two indications provides a merged indication which has the integral value prescribed by one indication but the more accurate fraction determined by the other. However, the integral value is necessary because, eventually, and after further mergers as appropriate, a merged indication must be divided by the harmonic number to obtain an indication of phase angle at the fundamental frequency. Preferably a mean value of the phase angle of the fundamental is derived from a multiplicity of indications of the phase angle of the fundamental.

It is presumed that the available primary indications $\phi_5$, $\phi_6$, $\phi_8$ and $\phi_9$ are the measured and stored phase angles of the input signals at the frequencies 5F, 6F, 8F and 9F respectively, and that it is desired to obtain therefrom the phase of the 1F signal.

In the first operation according to the flow diagram in Figure 2, the primary indication $\phi_5$ is subtracted from the primary indication $\phi_6$ so as to produce a numerical indication of phase at the "beat" frequency, in this case the fundamental frequency. This value of phase angle does not take into account the contributions to the fundamental phase angle from $\phi_8$ and $\phi_9$. The value $(\phi_6-\phi_5)$ is essentially fractional. When it $(\theta_1)$ is multiplied by 2, to give a value which may lie between zero and 2, the result, which may have an integer and a fraction, represents the phase of the second harmonic 2F and is represented as $\psi_2$. Another estimate of the phase angle of the second harmonic is obtainable by a combination of all the four primary indications by means of the expression

$$(\phi_6-\phi_5+\phi_9-\phi_8).$$

This expression, which relies on all four primary indications, will provide a fractional value, lying between zero and 2. This value $(\theta_2)$ is likely to be a better estimate of the phase angle at the second harmonic, and if divided by 2 would give a correct indication of the phase angle at the fundamental. However, although the other estimate is a less accurate estimate of the phase of the second harmonic, it has the merit of containing the required integer. The two estimates are merged, by taking the integer of the estimate which provides the integer and the fraction from the other estimate. The merged indication thus obtained could be divided by 2 to yield an indication of phase angle but is preferably used in further mergers with other numerical indications of phase angle at other frequencies to provide further merged indications of appropriate integral value and more accurate fractional value. Thus, the merged indication $\psi_2'$ already obtained, if multiplied by 3/2, yields a number, $(\psi_3)$ in the range zero to 3, which represents a first integer and fractional estimate of the phase of the third harmonic of the fundamental. A second, but only fractional estimate $(\theta_3)$ of the phase of the third harmonic is available from the expression

$$(\phi_6+\phi_5-\phi_8).$$

A merge operation yields again, a fractional value $(\psi_3')$ representing the second estimate and an integral value which, apart from a possible carry digit, is exactly the integer obtained by the first process. In order to obtain a first estimate of the phase angle at the fourth harmonic 4F, the last-mentioned merged indication is multiplied by 4/3, to yield a number $(\psi_4)$ in the range zero to 4. This is merged with a second estimate $(\theta_4)$, representing the fractional part only, obtained from the expression $(2\phi_6-\phi_8)$. The merged indication thereby obtained is multiplied by 3/2, which provides a first estimate, $\psi_6'$ containing both integer and fraction, of the phase angle at the sixth harmonic 6F. This estimate will be within the range zero to 6.

The sixth harmonic is one which is available at the input and accordingly the first estimate as obtained from the previous mergers, is merged with the primary numerical indication $\phi_6$ $(=\theta)$ to obtain the best estimate of the integer and fraction in the range zero to 6. This value may be divided by the harmonic number (6) to obtain $\psi_{1(6)}$ namely the first one of the indications of phase angle of the fundamental. The remaining stages of comparison consist of multiplying this estimate by 5, 8 and 9 respectively and merging the indications thus obtained with the respective primary indications $\phi_5$, $\phi_8$ and $\phi_9$ to yield estimates, containing both integer and fraction, of phase angle at the fifth, eighth and ninth harmonics; these estimates are divided by 5, 8 and 9 respectively to provide three more estimates of the phase angle at the fundamental frequency. Finally, the available four estimates are combined and divided by 4 to yield a mean value of the phase angle of the fundamental.

In practice, the merge function may be slightly more complex than is suggested above in order to avoid the perpetuation and indeed multiplication of error. If for example the sixth harmonic is seriously degraded, the effect of it might be multiplied manyfold by the time of the final mergers and accordingly the merge function is performed with prescribed limits, which depend on the relevant harmonic number, for the value of the integer in the merged indication that is obtained. The significance of Figure 3 and the constraints prescribed in it will be readily apparent to those skilled in the art.

Table I indicates a number of worked examples. In the first example, the values 0.5, 0.2, 0.6 and 0.3 are used for the phase values of the four harmonics. As may be seen, the phase value obtained is the correct value of 0.7.

In the second example, the harmonic phase values have been slightly altered for the fifth, eighth and ninth harmonics, but that for the sixth harmonic is as before. It will be seen that notwithstanding an error of 0.1 ($2\pi$) radians in each of the three altered harmonic signals, the final value is only 0.02 ($2\pi$) radians in error. In the fourth example, the fifth, eighth and ninth harmonics are as for the second example but the sixth harmonic is presumed to be very degraded. The final value obtained is 0.33 which is in fact consistent though unexpected; a value of 0.33 ($2\pi$) for the fundamental corresponds to values of 0.66, zero, 0.67 and zero instead of the values 0.6, 0, 0.7 and 0.2 chosen for the phase values in the fourth example.

The third example indicates a limiting case of 36° degradation of the phase angle of the sixth harmonic. This may yield either 0.34 or 0.7 for the final phase angle, which is an unsatisfactory result. This indicates that the particular programme is more sensitive to phase error in the sixth harmonic than it is to phase error in the other harmonics, a phenomenon which is consequent on the use of the merged indication for the sixth harmonic to derive the final estimates for the other harmonics.

## Claims

1. Apparatus for providing a signal numerically indicating phase angle at a fundamental frequency from a first signal numerically indicating the phase angle of a lower harmonic of the fundamental frequency and a second signal numerically indicating phase angle within a complete cycle of phase change at the frequency of a higher harmonic of the fundamental frequency, the apparatus being arranged (i) to multiply the first signal to render it effectively at the frequency of the said higher harmonic and in a form including an integer representing complete cycles of phase change at the frequency of the said higher harmonic (ii) to form a merged signal comprising the said integer and the said second signal; and (iii) to divide the said merged signal by the harmonic number of the said higher harmonic.

2. Apparatus for obtaining the phase of a fundamental signal from a plurality of its harmonics, the apparatus being arranged to receive, or to convert the harmonics to, a set of primary numerical indications which represent fractional phase angles of the respective harmonics, that is to say, phase angle within a complete cycle of phase change at the respective frequency, characterised in that the apparatus is further arranged to perform a multiplicity of mergers of numerical indications of phase angle, wherein for each merger, the respective numerical indications represent phase angle at different frequencies and of which at least one of the said indications ($\theta_3$) is a combination

$$(e.g. \phi_6 + \phi_5 - \phi_8)$$

of a plurality of said primary indications and of which the other is either another such combination or a merged indication ($\psi_2'$) and in each merger the numerical indication of phase angle at the lower of the said different frequencies is multiplied to represent phase angle ($\psi_3$) at the same frequency as the other numerical indication and the result ($\psi_3'$) of the merger is a phase angle indication consisting of the integral part of the multiplied indication and the fractional part of the said other indication, and wherein an integral part represents an integral number of cycles of phase change and a fractional part represents phase angle within a cycle of phase change, to form at least one final merger of a primary indication ($\phi_6$) with a respective numerical indication ($\psi_6$) obtained from previous mergers at successively higher frequencies and to divide the indication ($\psi_6'$) obtained by the said final merger by a respective harmonic number (6) to provide an indication ($\psi_{1(6)}$) of the fundamental's phase angle.

3. Apparatus according to claim 2 and arranged further to form final mergers of the various primary indications ($\phi_5$, $\phi_6$, etc) each with a respective merged indication ($\psi_5$, $\psi_6$ etc) to divide the phase angle indications ($\psi_5'$, $\psi_6'$ etc) obtained by the final mergers each by a respective harmonic number (5, 6 etc) to provide a multiplicity of indications ($\psi_{1(5)}$, $\psi_{1(6)}$) of the fundamental's phase angle, and to form a mean ($\phi_1$) of the said multiplicity of indications of the fundamental's phase angle.

4. Apparatus according to claim 3 in which the said harmonics are the fifth, sixth, eighth and ninth harmonics.

5. Apparatus according to any of claims 2 to 4 in which some of the frequencies for which mergers are made are harmonics lower than the lowest of the said plurality of harmonics.

6. A radio navigation receiver adapted for use in a phase comparison radio-navigation system of a kind in which phase-locked signals at a plurality of harmonics of a fundamental frequency are radiated from respective transmitters and, from time to time, radiated together from the various transmitters in turn, the receiver being arranged to make phase comparisons between signals derived from said harmonics in order to provide indications of position lines through the receiver, the said receiver including means for resolving ambiguities in the position lines by making phase comparisons at the fundamental frequency and characterised by apparatus according to any of claims 2 to 5 for providing an indication of the phase angle of the fundamental frequency.

7. A receiver for use in a system in which a plurality of signals which are different harmonics of a fundamental frequency are radiated in a fixed phase relationship and the receiver is arranged to derive an indication of the apparent phase angle of the fundamental frequency at the location of the receiver by making pse comparisons derived from the harmonic signals received by the receiving apparatus, the receiver being arranged to convert the received signals into numbers representing fractions of the modulus of phase change at the respective frequency and characterised in that it performs at least the following operations:

(1) obtaining phase angle indications ($\theta_1$, $\bar{\theta}_2$ etc) from different ones or different combinations

$$(\phi_6+\phi_5-\phi_8;\ 2\phi_6-\phi_8;\ \text{etc})$$

of the received signals;

(2) a multiplicity of mergers, each merger being a combination of two phase angle indications at a respective pair of frequencies by multiplying the phase angle indication (e.g. $\theta_1$) at the lower frequency of the pair of frequencies by the ratio (2) of the two frequencies so that the result ($2\psi_1$) represents phase angle at the higher frequency and has both an integral part representing an integral number of complete cycles of phase change at the higher frequency and a fractional part representing phase angle within a cycle of phase change at the higher frequency and forming a resultant ($\psi_2'$) consisting of the

fractional phase angle indication ($\theta_2$) at the higher frequency with the said integral part of the phase angle indication multiplied up to the higher frequency;

(3) obtaining by the use of such mergers at successively higher frequencies a phase angle indication ($\psi_6'$), including an integral part and a fractional part, at a harmonic frequency of the fundamental frequency; and

(4) dividing that phase angle indication by the harmonic number (6) of the last-mentioned harmonic frequency to provide an indication ($\psi_{1(6)}$) of the apparent phase angle of the fundamental frequency.

8. A receiver according to claim 7 wherein, in some but not all the mergers, at least one of the phase angle indications is a previous merger of two phase angle indications at a respective pair of frequencies of which the higher is less than the higher frequency in the later merger.

9. A receiver according to claim 7 or claim 8 wherein final mergers are made between the received signals ($\phi_5$, $\phi_6$ etc) and phase angle indications ($\psi_5$, $\psi_6$ etc) obtained by respective mergers and the phase angle indications ($\psi_5'$, $\psi_6'$) obtained by these final mergers are divided each by a respective harmonic number (5, 6 etc) to provide a multiplicity of indications ($\psi_{1(5)}$; $\psi_{1(6)}$; etc) of the fundamentals of phase angle and the last-mentioned indications are averaged to form a means value ($\phi_1$) for the phase angle at the fundamental frequency.

**Revendications**

1. Appareil destiné à fournir un signal indiquant numériquement l'angle de phase à une fréquence fondamentale partir d'un premier signal indiquant numériquement l'angle de phase d'un harmonique inférieur de la fréquence fondamentale d'un deuxième signal indiquant numériquement l'angle de phase au sein d'un cycle complet de changement de phase à la fréquence d'un harmonique supérieur de la fréquence fondamentale, l'appareil étant arrangé de façon (i) à multiplier le premier signal pour le rendre effectif à la fréquence dudit harmonique supérieur et le présenter sous une forme comprenant un nombre entier représentant les cycles complets de changement de phase à la fréquence dudit harmonique supérieur (ii) à former un signal fusionné comprenant ledit nombre entier et ledit second signal; et (iii) à diviser ledit signal fusionné par le nombre harmonique dudit harmonique supérieur.

2. Appareil permettant d'obtenir a phase d'un signal fondamental à partir d'une pluralité de ses harmoniques, l'appareil étant arrangé de façon recevoir, ou à transformer les harmoniques en une série d'indications numériques primaires, qui représentant les angles de phase fractionnels des harmoniques respectifs, c'est-à-dire l'angle de phase au sein d'un cycle de changement de phase complet à la fréquence respective, se caractérisant par le fait que l'appareil est également arrangé de façon à exécuter une multiplicité de fusions des indications numériques de l'angle de phase, dans lesquelles, pour chaque fusion, les indications numériques respectives représentent l'angle de phase à différentes fréquences et dont au moins l'une desdites indications $(\theta_3)$ est une combination (par ex

$$\phi_6 + \phi_5 - \phi_8)$$

d'une pluralité desdites indications primaires et dont l'autre est soit une autre combinaison de ce type, soit une indication fusionnée $(\psi_2')$ et dans chaque fusion l'indication numérique de l'angle de phase à la plus haute desdites fréquences différentes est multipliée pour représenter l'angle de phase $(\psi_3)$ à la même fréquence que l'autre indication numérique et le résultat $(\psi_3')$ de la fusion est une indication d'angle de phase comprenant la partie nombre entier de l'indication multipliée et la partie fractionnelle de ladite autre indication, et dans laquelle la partie nombre entier représente un nombre entier de cycles de changement de phase et la partie fractionelle représente l'angle de phase au sein d'un cycle de changement de phase pour constituer au moins une fusion finale d'une indication primaire $(\phi_6)$ avec une indication numérique respective $(\psi_6)$ obtenur à partir des fusions précédentes à des fréquences successivement plus hautes et pour diviser l'indication $(\psi_6')$ obtenue par ladite fusion finale par un nombre harmonique respectif (6) pour fournir une indication $(\psi_{1(6)}')$ de l'angle de phase de la fréquence fondamentale.

3. Appareil suivant la revendication 2, et arrangé en outre pour constituer les fusions finales des diverses indications primaires $(\phi_5, \phi_6,$ etc), ayant chacune une indication fusionnée respective $(\psi_5, \psi_6,$ etc) pour diviser chaque indication d'angle de phase $(\psi_5', \psi_6'$ etc) obtenue par les fusions finales par un nombre harmonique respectif (5, 6 etc) afin de fournir une multiplicité d'indications $(\psi_{1(5)}, \psi_{1(6)})$ de l'angle de phase de la fréquence fondamentale, et afin de constituer une moyenne $(\phi_1)$ de ladite multiplicité d'indications de l'angle de phase de la fréquence fondamentale.

4. Appareil suivant la revendications 3, dans lequel lesdits harmoniques sont le cinquième, le sixième, le huitième et le neuvième harmonique.

5. Appareil suivant l'une quelconque des revendications 2 à 4, dans lequel certaines des fréquencies pour lesquelles les fusions sont faites sont des harmoniques plus bas que le plus bas de ladite pluralité d'harmoniques.

6. Un récepteur de radio-navigation adapté pour utilisation dans un système de radio-navigation à comparaison de phases d'un type dans lequel les signaux à verrouillage de phase à une pluralité des harmoniques d'une fréquence fondamentale sont diffusés à partir d'émetteurs respectifs, et, le cas échéant, diffusés ensemble à partir des divers émetteurs pris tour à tour, le récepteur étant arrangé de façon à faire des comparaisons de phases entre les signaux dérivés desdits harmoniques afin de fournir des indicationas des lignes de position l'intermédiaire du récepteur, ledit récepteur comprenant des moyens pour résoudre les ambiguités des lignes de position en effectuant des comparaisons de phase à la fréquence fondamentale, et étant caractérisé par un appareil correspondant à l'une quelconque des revendications 2 à 5 destiné à fournir une indication de l'angle de phase de la fréquence fondamentale.

7. Un récepteur pour utilisation dans un système dans lequel une pluralité de signaux qui sont des harmoniques différents d'une fréquence fondamentale sont diffusés dans un rapport de phase fixe et le récepteur est arrangé de façon à dériver une indication de l'angle de phase apparent de la fréquence fondamentale à l'emplacement du récepteur en effectuant des comparaisons de phases dérivées des signaux harmoniques reçus par l'appareil récepteur, le récepteur étant arrangé de façon à transformer les signaux reçus en nombres représentant des fractions du module de changement de phase à la fréquence respective et se caractérisant par l'exécution d'au moins les opérations suivantes:

(1) obtention des indications d'angle de phase $(\theta_1, \theta_2$ etc) à partir de différents signaux reçus ou de différentes combinaisons

$$(\phi_6 + \phi_5 - \phi_8; \ 2\phi_6 - \phi_8;$$

etc) des signaux reçus;

(2) une multiplicité de fusions, chaque fusion étant une combinaison de deux indications d'angle de phase à une paire de fréquences respective en multipliant l'indication d'angle de phase (par ex. $\theta_1$) à la fréquence la plus basse de la paire de fréquences par la raison (2) des deux fréquences de sorte que le résultat $(2\psi_1)$ représente l'angle de phase à la fréquence la plus haute et comporte à la fois une partie nombre entier représentant une nombre entier de cycles complets de changement de phase à la fréquence la plus haute et une partie fractionelle représentant l'angle de phase au sein d'un cycle de changement de phase à la fréquence la plus haute et formant une résultante $(\psi_2')$ consistant en l'indication de changement de phase fractionelle $(\theta_2)$ à la fréquence la plus haute avec ladite partie nombre entier de l'indication d'angle de phase multipliée jusqu'à la fréquence la plus haute;

(3) obtention par l'utilisation de ces fusions à des fréquencies successivement plus hautes d'une indication d'angle de phase $(\psi_6')$, comprenant une partie nombre entier et une partie fractionnelle, à une fréquence harmonique de la fréquence fondamentale; et

(4) division de cette indication d'angle de phase par le nombre harmonique (6) de la dernière fréquence harmonique mentionée pour

fournir une indication ($\psi_{1(6)}$) de l'angle de phase apparent de la fréquence fondamentale.

8. Un récepteur suivant la revendication 7 dans lequel, dans certaines fusions mais non toutes, au moins l'une des indicatués d'angle de phase est une fusion antérieure de deux indications d'angle de phase à une paire de fréquences respective dont la plus haute est inférieure à la fréquence la plus haute de la fusion ultérieure.

9. Un récepteur suivant la revendication 7 ou la revendication 8, dans lequel des fusions finales sont effectuées entre les signaux reçus ($\phi_5$, $\phi_6$ etc), et les indications d'angle de phase ($\psi_5$, $\psi_6$ etc) obtenues par les fusions respectives et les indications d'angle de phase ($\psi_5'$, $\psi_6'$) obtenues par ces fusions finales sont chacune divisées par un nombre harmonique respectif (5, 6 etc) pour fournir une multiplicité d'indications ($\psi_{1(5)}$; $\psi_{1(6)}$; etc) des fréquences fondamentales de l'angle de phase et la moyenne des dernières indications mentionnées est calculée pour constituer une valeur moyenne ($\phi_1$) pour l'angle de phase à la fréquence fondamentale.

**Patentansprüche**

1. Ein Apparat zur Bereitstellung eines Signals, das numerisch Phasenwinkel bei einer Grundfrequenz von einem ersten Signal anzeigt, das wiederum numerisch die Phasenwinkel von einer niedrigeren Oberschwingung der Grundfrequenz angibt und eines zweiten Signals, das numerisch Phasenwinkel innerhalb eines kompletten Phasenänderungszyklus bei der Frequenz einer höheren Oberschwingung der Grundfrequenz anzeigt, indem der Apparat so angeordnet ist, um (i) das erste Signal zu multiplizieren, um es bei der Frequenz der besagten höheren Oberschwingung wirksam zu machen und in eine Form zu bringen, die eine ganze Zahl umfaßt, die die kompletten Phasenänderungszyklen bein einer Frequenz der besagten höheren Oberschwingung darstellt, und im (ii) ein gemeinsames Signal zu bilden, das aus der besagten ganzen Zahl und dem besagten zweiten Signal besteht; und um (iii) das besagte gemeinsame Signal durch die Ordnungszahl der Oberschwingung der besagten höheren Oberschwingung zu teilen.

2. Ein Apparat zur Erzielung der Phase von einem Grundsignal aus einer Veilfalt seiner Oberschwingungen, indem der Apparat in einer Weise angeordnet ist, um die Oberschwingungen zu empfangen oder sie in einen Set von Primärzahlenanzeigen umzuwandeln, die in einer Bruchzahl ausgedrückte Phasenwinkel der entsprechenden Oberschwingungen darstellen, das heißt, Phasenwinkel innerhalb eine kompletten Phasenänderungszyklus bei der entsprechenden Frequenz, dadurch gekennzeichnet, daß der Apparat darüberhinaus so angeordnet ist, um eine Fülle von Zusammenschlüssen von Zahlenanzeigen der Phasenwinkel auszuführen, worin für jeden Zusammenschluß die entsprechenden numerischen Anzeigen Phasenwinkel bei verschiedenen Frequenzen darstellen und von denen mindestens eine der besagten Anzeigen ($\theta_3$) eine Kombination (z. B.

$$\phi_6 + \phi_5 - \phi_8)$$

von einer Vielfalt der besagten Primäranzeigen ist und von denen die andere entweder eine andere solche Kombination oder eine gemeinsame Anzeige ($\psi_2'$) ist und in jedem Zusammenschluß die Zahlenanzeige von Phasenwinkeln bei der niedrigeren der besagten unterschiedlichen Frequenzen multipliziert wird, um den Phasenwinkel ($\psi_3$) bei der gleichen Frequenz wie die andere Zahlenanzeige darzustellen und das Ergebnis ($\psi_3'$) des Zusammenschlusses ist eine Phasenwinkelanzeige, die aus dem ganzzahligen Teil der multiplizierten Anzeige und dem Bruchteil der besagten anderen Anzeige besteht und worin ein ganzzahliger Teil eine ganze Zahl der Phasenänderungszyklen und ein Bruchteil Phasenwinkel innerhalb eines Phasenänderungszyklus darstellt, um mindestens einen endgültigen Zusammenschluß einer Primäranzeige ($\phi_6$) mit einer entsprechenden aus den vorausgegangenen Zusammenschlüssen bei aufeinanderfolgenden höheren Frequenzen erlangten Zahlanzeige ($\psi_6$) zu bilden und um die durch den besagten endgültigen Zusammenschluß erzielte Anzeige ($\psi_6'$) durch eine entsprechende Ordnungszahl der Oberschwingung (6) zu teilen, damit eine Anzeige ($\psi_{1(6)}$) von dem Phasenwinkel der Grundfrequenz bereitgestellt wird.

3. Ein Apparatus nach Anspruch 2 und darüberhinaus so angeordnet, um endgültige Zusammenschlüsse von den verschiedenen Primäranzeigen ($\phi_5$, $\phi_6$ usw), eine jede mit einer entsprechenden gemeinsamen Anzeige ($\psi_5$, $\psi_6$ usw) zu bilden, um die Phasenwinkelanzeigen ($\psi_5'$, $\omega_6'$ usw), die durch die endgültigen Zusammenschlüsse erzielt worden sind, je durch eint entsprechende Ordnungszahl der Oberschwingungen (5, 6 usw) zu teilen, um für eine Vielzahl von Anzeigen ($\psi_{1(5)}$, $\psi_{1(6)}$) von dem Phasenwinkel der Grundfrequenz zu sorgen und um einen Mittelwert ($\phi_1$) von de besagten Vielzahl der Anzeigen von dem Phasenwinkel der Grundfrequenz zu bilden.

4. Ein Apparat nach Anspruch 3, in dem es sich bei den besagten Oberschwingungen um die fünfte, sechste, achte und neunte Oberschwingung handelt.

5. Ein Apparat nach einem der Ansprüche 2 bis 4, in dem es sich bei einigen Frequenzen, für die die Zusammenschlüsse ausgeführt werden, um Oberschwingungen handelt, die niedriger als die niedrigsten der besagten Vielfalt von Oberschwingungen sind.

6. Ein zum Gebrauch in einem Funknavigationssystem unter Anwendung von Phasenvergleich geeigneter Funknavigationsempfänger einer Art, in dem phasenstarre Signale bei einer Vielfalt von Oberschwingungen einer Grundfrequenz von entsprechenden Sendern ausgestrahlt werden und, von Zeit zu Zeit, zusammen von den verschiedenen Sendern umschichtig ausgestrahlt werden, indem der Empfänger so angeordnet ist, um Phasenvergleiche zwischen Signalen vorzunehmen, die von den besagten Oberschwingungen abgeleitet werden, um Anzeigen von den Positionslinien durch den Empfänger zu liefern, indem der besagte Empfänger Mittel zur Lösung von Zweideutigkeiten in den Positionslinien enthält, indem er Phasenvergleiche bei der Grundfrequenz anstellt und durch den Apparat nach einem der Ansprüche 2 bis 5 zur Bereitstellung einer Anzeige der Phasenwinkels der Grundfrequenz gekennzeichnet ist.

7. Ein Empfänger zur Anwendung in einem System, in dem eine Vielfalt von Signalen, bei denen es sich um verschiedene Oberschwingungen von einer Grundfrequenz handelt, in einem festen Phasenverhältnisausgestrahlt wird und der Empfänger so angeordnet ist, um eine Anzeige des scheinbaren Phasenwinkels der Grundfrequenz am Standort des Empfängers durch Vornahme von Phasenvergleichen abzuleiten, die von den Oberschwingungssignalen abgeleitet werden, die wiederum von dem empfangenden Apparat empfangen werden, indem der Empfänger so angeordnet ist, um die empfangenen Signale in Zahlen umzuwandeln, die Fraktionen des Phasenänderungsmodulus bei der entsprechenden Frequenz darstellen und dadurch gekennzeichnet, daß er zumindest die folgenden Vorgänge ausführt:

(1) Erzielung von Phasenwinkelanzeigen ($\theta_1$, $\theta_2$ usw) von verschiedenen oder von verschiedenen Kombinationen

$$(\phi_6 + \phi_5 - \phi_8; \ 2\phi_6 - \phi_8;$$

usw) der empfangenen Signale;

(2) eine Vielzahl von Zusammenschlüssen, indem es sich bei jedem Zusammenschluß um eine Kombination von zwei Phasenwinkelanzeigen bei zwei entsprechenden Frequenzen handelt, durch Multiplikation der Phasenwinkelanzeige (z. B. $\theta_1$) bei der niedrigeren Frequenz der Frequenzpaares mit dem Verhältnis (2) der beiden Frequenzen, so daß der Ergebnis ($2\phi_1$) Phasenwinkel bei der höheren Frequenz darstellt und sowohl einen ganzzahligen Teil hat, der eine ganze Zahl der kompletten Phasenänderungszyklen bei der höheren Frequenz als auch einen Bruchteil der Phasenwinkel innerhalb eines Phasenänderungszyklus bei der höheren Frequenz darstellt und eine Resultierende ($\psi_2'$) bildet, die aus der in einer Bruchzahl ausgedrückten Phasenwinkelanzeige ($\theta_2$) bei der höheren Frequenz mit dem besagten ganzzahligen Teil der Phasenwinkelanzeige besteht, die bis zur höheren Frequenz multipliziert worden ist;

(3) durch die Anwendung von solchen Zusammenschlüssen, bei aufeinanderfolgenden höheren Frequenzen, Erzielung einer Phasenwinkelanzeige ($\psi_6'$), die bei einer Oberschwingungsfrequenz der Grundfrequenz einen ganzzahligen Teil und einen Bruchteil enthält; und

(4) Teilung dieser Phasenwinkelanzeige durch die Ordnungszahl der Oberschwingung (6) der zuletzt erwähnten Oberschwingungsfrequenz, um eine Anzeige ($\psi_{1(6)}$) des scheinbaren Phasenwinkels der Grundfrequenz bereitzustellen.

8. Ein Empfänger nach Anspruch 7, worin in einigen, jedoch nicht allen, Zusammenschlüssen zumindest eine der Phasenwinkelanzeigen ein vorausgegangener Zusammenschluß von zwei Phasenwinkelanzeigen bei einem entsprechenden Frequenzpaar ist, von denen die höhere niedriger ist als die höhere Frequenz in dem späteren Zusammenschluß.

9. Ein Empfänger nach Anspruch 7 oder Anspruch 8, worin endgültige Zusammenschlüsse zwischen den empfangenen Signalen ($\phi_5$, $\phi_6$ usw) ausgeführt werden und Phasenwinkelanzeigen ($\psi_5$, $\psi_6$ usw) von den entsprechenden Zusammenschlüssen erlangt werden und die durch diese endgültigen Zusammenschlüsse erzielten Phasenwinkelanzeigen ($\psi_5'$, $\psi_6'$) je durch eine entsprechende Ordnungszahl der Oberschwingungen (5, 6 usw) geteilt werden, um eine Vielzahl von Anzeigen ($\psi_{1(5)}$; $\psi_{1(6)}$; usw) von Phasenwinkeln der Grundfrequenz bereitzustellen und die zuletzt erwähnten Anzeigen zur Bildung eines Mittelwertes ($\phi_1$) für die Phasenwinkel bei der Grundfrequenz ausgeglichen werden.

FIG. 1A.

FIG. 1D.

FIG. 1D.

0 040 924

FIG. 1B.

DIVIDE BY
20
COUNTER

DIVIDE BY 12
COUNTER
AND TWO
PHASE CLOCK
GENERATOR

BUFFER

10

D7    D0    DEE    A0

1PQ

φ1

φ2

CPU

φ1
φ2

φ2

MONO
~100μs

MONO
~100μs

En

A15
VmA
R/W

FIG. 1.

| FIG. 1A. | FIG. 1B. | FIG. 1C. |

2

FIG. 1C.

FIG.2A.

INPUT INFORMATION

| $\phi_5$ | $\phi_6$ | $\phi_8$ | $\phi_9$ |
|---|---|---|---|

$\phi_n$ is phase angle (fraction) of $nF$ receiver channel
$\theta_n$ is fraction of $nF$ computed from $\phi$'s
$\Psi_n$ is integer and fraction at $nF$

FIG. 2B.

MULTIPLY BY
$5 \rightarrow \psi_5$
(INTEGER +
FRACTION)

$\phi 5$
(FRACTION)

MERGE AND
DIVIDE BY
$5 \rightarrow \psi_1(5)$
BASED ON
$\phi 5$(FRACTION)

ADD TOGETHER
AND DIVIDE BY 4
(with necessary
regard to
boundaries)
to give
$\psi_1$

MULTIPLY BY
$8 \rightarrow \psi_8$
(INTEGER +
FRACTION)

$\phi 8$
(FRACTION)

MERGE AND
DIVIDE BY
$8 \rightarrow \psi_1(8)$
BASED ON
$\phi 8$(FRACTION)

MULTIPLY BY
$9 \rightarrow \psi_9$
(INTEGER +
FRACTION)

$\phi 9$
(FRACTION)

MERGE AND
DIVIDE BY
$9 \rightarrow \psi_1(9)$
BASED ON
$\phi 9$(FRACTION)

FIG. 2.

| FIG.2A. | FIG. 2B |
| --- | --- |

FIG. 3.    FLOW DIAGRAM OF MERGE FUNCTION.

## TABLE I

| | ex I | ex II | ex III | ex IV |
|---|---|---|---|---|
| $\phi_5$ } input data | 0.5 | 0.6 | 0.6 | 0.6 |
| $\phi_6$ | 0.2 | 0.2 | 0.1 | 0.0 |
| $\phi_8$ | 0.6 | 0.7 | 0.7 | 0.7 |
| $\phi_9$ | 0.3 | 0.2 | 0.2 | 0.2 |
| $\theta_1 = \phi_6 - \phi_5$ } intermediate computation modulo 1 | 0.7 | 0.6 | 0.5 | 0.4 |
| $\theta_2 = \phi_6 - \phi_5 + \phi_9 - \phi_8$ | 0.4 | 0.1 | 0.0 | 0.9 |
| $\theta_3 = \phi_6 + \phi_5 - \phi_8$ | 0.1 | 0.1 | 0.0 | 0.9 |
| $\theta_4 = 2\phi_6 - \phi_8$ | 0.8 | 0.7 | 0.5 | 0.3 |
| $\theta_6 \equiv \phi_6$ | 0.2 | 0.2 | 0.1 | 0.0 |
| $\psi_1 = \theta_1$ | 0.7 | 0.6 | 0.5 | 0.4 |
| $\psi_2 = 2 \times \psi_1$ } modulo 2 | 1.4 | 1.2 | 1.0 | 0.8 |
| merge $\psi_2$ with $\theta_2 \Rightarrow \psi_2'$ | 1.4 | 1.1 | 1.0 | 0.9 |
| $\psi_3 = {}^3/_2 . \psi_2'$ } modulo 3 | 2.1 | 1.65 | 1.5 | 1.35 |
| merge $\psi_3$ with $\theta_3 \Rightarrow \psi_3'$ | 2.1 | 2.1 | 1 or 2 | 0.9 |
| $\psi_4 = {}^4/_3 . \psi_3'$ } modulo 4 | 2.8 | 2.8 | 4/3 or 2.67 | 1.2 |
| merge $\psi_4$ with $\theta_4 \Rightarrow \psi_4'$ | 2.8 | 2.7 | 1.5 or 2.5 | 1.3 |
| $\psi_6 = {}^3/_2 . \psi_4'$ } modulo 6 | 4.2 | 4.05 | 2.25 or 3.75 | 1.95 |
| merge $\psi_6$ with $\theta_6 \Rightarrow \psi_6'$ | 4.2 | 4.2 | 2.1 or 4.1 | 2.0 |
| $\psi_{1(6)} = {}^1/_6 . \psi_6'$ | 0.7 | 0.7 | 0.35 or 0.68 | 0.33 |
| $\psi_5 = 5\psi_{1(6)}$ merged with $\phi_5 \to \psi_5'$ | 3.5 | 3.6 | 1.6 or 3.6 | 1.6 |
| $\psi_{1(5)} = {}^1/_5 . \psi_5'$ | 0.7 | 0.72 | 0.32 or 0.72 | 0.32 |
| $\psi_8 = 8\psi_{1(6)}$ merged with $\phi_8 \to \psi_8'$ | 5.6 | 5.7 | 2.7 or 5.7 | 2.7 |
| $\psi_{1(8)} = {}^1/_8 . \psi_8'$ | 0.7 | 0.71 | 0.34 or 0.71 | 0.33 |
| $\psi_9 = 9\psi_{1(6)}$ merged with $\phi_9 \to \psi_9'$ | 6.3 | 6.2 | 3.2 or 6.2 | 3.2 |
| $\psi_{1(9)} = {}^1/_9 . \psi_9'$ | 0.7 | 0.69 | 0.36 or 0.69 | 0.36 |
| $\phi_1 = {}^1/_4 \left[ \psi_{1(6)} + \psi_{1(8)} + \psi_{1(5)} + \psi_{1(9)} \right]$ | 0.7 | 0.68 | 0.34 or 0.7 | 0.33 |